Europäisches Patentamt

**European Patent Office**

Office européen des brevets

(11) Veröffentlichungsnummer: **0 290 973 B1**

(12) **EUROPÄISCHE PATENTSCHRIFT**

(45) Veröffentlichungstag der Patentschrift:
**24.07.91 Patentblatt 91/30**

(51) Int. Cl.⁵: **B01D 53/34**

(21) Anmeldenummer: **88107292.0**

(22) Anmeldetag: **06.05.88**

(54) **Verfahren zur NOx-Abscheidung aus Abgasströmen in Kontakt mit einer regenerierbaren Feststoffschicht.**

(30) Priorität: **15.05.87 DE 3716334**

(43) Veröffentlichungstag der Anmeldung:
**17.11.88 Patentblatt 88/46**

(45) Bekanntmachung des Hinweises auf die Patenterteilung:
**24.07.91 Patentblatt 91/30**

(84) Benannte Vertragsstaaten:
**AT CH GB LI NL SE**

(56) Entgegenhaltungen:
**GB-A- 1 394 945**
**GB-A- 1 432 656**

(73) Patentinhaber: **Forschungszentrum Jülich GmbH**
**Postfach 1913**
**W-5170 Jülich (DE)**

(72) Erfinder: **Filss, Peter, Dr.**
**Nordstrasse 8**
**W-5170 Jülich (DE)**

Jouve, 18, rue Saint-Denis, 75001 PARIS

## Beschreibung

Die Erfindung bezieht sich auf ein Verfahren zur $NO_x$-Abscheidung aus $NO_x$-haltigen Abgasströmen, das im Oberbegriff des Patentanspruches 1 angegeben ist.

Bei einem in der DE-C-35 20 671 beschriebenen Verfahren ist es bekannt, die Feststoffschicht auf die Trägerkörper durch Benetzen der Trägerkörper mit einer Imprägnierlösung, die die mit den Stickoxiden reagierenden Komponenten enthält, und durch Eintrocknen der Imprägnierlösung aufzubringen. Beim bekannten Verfahren wird die sich durch die $NO_x$-Bindung verbrauchende Feststoffschicht durch erneutes Benetzen mit der Imprägnierlösung nachimprägniert und erst nach mehrmaligem Beschichten als verbrauchte Feststoffschicht abgewaschen. Mit der bisher bekannten Zusammensetzung der Feststoffschichten macht das Entfernen von $NO_x$ aus Schadgasen jedoch besonders bei hohem NO-Anteil und geringem Gehalt an weiterem $NO_x$ große Schwierigkeiten, weil mit $NO_x$ eine Vielzahl von Oxidationsprodukten des Stickstoffs zusammengefaßt werden, von denen NO und $NO_2$ nur die wichtigsten sind. In der Regel verbleibt dann bei der Reinigung des Abgases ein hoher NO-Anteil im Abgas, da mit den bekannten alkalischen Feststoffschichten in erster Linie nur $NO_2$ abtrennbar ist. Zwar wird NO in Gegenwart von Sauerstoff in der Gasphase gemäß der Reaktion

$$2\,NO + O_2 \rightarrow 2\,NO_2$$

in $NO_2$ umgewandelt. Diese Reaktion ist kinetisch jedoch insgesamt eine Reaktion dritter Ordnung und von zweiter Ordnung in NO, d.h. die Bildungsrate geht mit dem Quadrat des NO-Partialdruckes zurück. Die Reaktionszeiten für die Oxidation von NO-Restgehalten sind daher so lang, daß der dafür auszulegende Reaktionspfad technisch nicht mehr akzeptabel ist. Darüber hinaus besteht noch ein weiterer gravierender Nachteil : Die kinetische Reaktionskonstante für die oben angegebene Oxidation von NO hat bekanntermaßen einen leicht negativen Temperaturkoeffizienten ; die angestrebte $NO_2$-Bildung verläuft somit mit steigender Temperatur immer langsamer. Es läßt sich demnach ganz allgemein die Oxidation von NO durch eine Temperaturerhöhung prinzipiell nicht beschleunigen.

Aus der britischen Patentschrift GB-A-14 32 656 ist es bekannt, $KMnO_4$ für die Abscheidung von $NO_x$ einzusetzen. Es werden zur Absorption Lösungen oder aus $KMnO_4$ bestehende Partikel benutzt, wobei eine Reaktionstemperatur im Bereich zwischen 100 und 500°C einzustellen ist. Eine genügende Absenkung der NO-Konzentration am Gasausgang konnte damit jedoch nicht erreicht werden.

Aufgabe der Erfindung ist es, sowohl das Ausbilden der Feststoffschicht als auch deren Reaktionsfähigkeit mit dem Abgas zu optimieren.

Bei Lösung dieser Aufgabe geht die Erfindung von der Erkenntnis aus, daß die NO-Oxidation in der Gasphase als geschwindigkeitsbestimmender Schritt vor der eigentlichen $NO_x$-Absorption vermieden werden sollte. Die Oxidation des NO-Moleküls sollte vielmehr an der Feststoffschicht selbst erfolgen.

Diese Aufgabe wird bei einem Verfahren der eingangs genannten Art gemäß der Erfindung durch die in Patentanspruch 1 genannten Maßnahmen gelöst. Die Feststoffschicht wird aus einer wäßrigen Lösung oder Aufschlämmung des Permanganats nach Auftragen auf einem Trägerkörper durch Aufheizen der Schicht und Eintrocknen auf dem Trägerkörper gebildet, wobei zur Reaktion mit den Stickoxiden eine Betriebstemperatur für die Feststoffschicht zwischen 150 und 260°C, bevorzugt 200°C eingestellt wird. Unterhalb von 150°C läßt sich keine ausreichende Abscheidung mehr erreichen, optimale Werte stellen sich bei 200°C ein. $KMnO_4$ ist daher für die Rauchgasreinigung gut geeignet.

Das Kaliumpermanganat läßt sich als Feststoffschicht nach Reaktion mit NO mit einer Waschlösung ablösen. Zum Ablösen ist in einfachster Weise Wasser geeignet, es lassen sich jedoch auch Seifenlösungen oder schwach konzentrierte Säuren einsetzen. Die Bildung der Feststoffschicht durch Imprägnieren und das Ablösen der Feststoffschicht nach deren Reaktion mit den Abgasen mittels Waschlösungen ermöglicht große Durchsätze bei der Gasreinigung, weil die Reaktionspartner und die gebildeten Reaktionsprodukte als flüssige Lösungen schneller und einfach bewegt werden als festes Gut.

$KMnO_4$ läßt sich einer alkalischen Feststoffschicht zumischen. Mit solchen Feststoffschichten lassen sich dann neben NO zugleich auch schon höher oxidierte Stickoxide in wirtschaftlicher Weise aus dem Abgasstrom entfernen.

In weiterer Ausbildung der Erfindung nach Patentanspruch 2 wird beim Trocknen der Feststoffschicht zum Abführen der Dämpfe ein Spülgas verwendet, wobei der Trocknungsvorgang beendet wird, wenn aus dem Spülgas keine Feuchtigkeitstropfen mehr auskondensieren.

Die Erfindung wird nachfolgend anhand von Ausführungsbeispielen näher erläutert. Die Zeichnung zeigt im einzelnen :

Figur 1      Festbettreaktor für Schadgasdurchsätze von 0,5 bis 1 m³/h ;

Figur 2      rohrförmiger Versuchsreaktor für Gasdurchsätze von ca. 40 l/h ;

Figur 2a      Ausschnitt des Versuchsreaktors nach Figur 2.

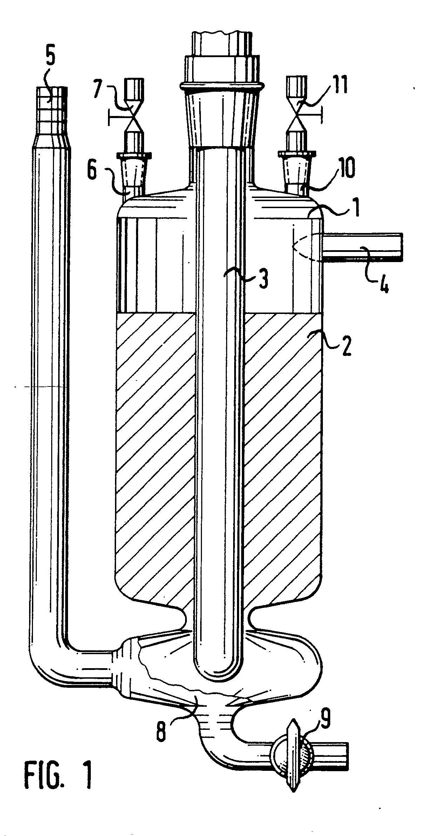

In Figur 1 ist schematisch ein Reaktor 1 dargestellt, der eine Festbettschüttung 2 von Raschigringen enthält. Die Raschigringe können durch einen zentralen Heizstab 3 erwärmt werden. Das Abgas strömt über einen Gaseinlaß 4 in den Reaktor ein und verläßt ihn als gereinigtes Gas über einen Gasausgang 5. Die Raschigringe werden mit einer Feststoffschicht beschichtet. Hierzu wird in die Festbettschüttung 2 über einen Lösungsmittelanschluß 6 eine Imprägnierlösung eingeleitet. Der Lösungsmittelanschluß 6 läßt sich mittels eines Zulaufhahns 7 öffnen. Überschüssige Imprägnierlösung läuft aus der Festbettschüttung 2 ab und wird im Boden 8 des Reaktors gesammelt. Die überschüssige Imprägnierlösung kann von dort durch Öffnen eines Ablaßhahnes 9 abgezogen werden.

Zur Ausbildung der Feststoffschicht wird der Lösungsmittelfilm auf den Raschigringen durch Aufheizen mit dem Heizstab 3 auf der Oberfläche der Raschigringe getrocknet. Bei diesem Trocknungsvorgang durchströmt Spülgas den Reaktor, das über den Gaseinlaß 4 einströmt und am Gasausgang 5 entnommen wird. An der Feuchtigkeit des Spülgases läßt sich der Trocknungsablauf kontrollieren. Der Trocknungsvorgang ist abgeschlossen, wenn aus dem Spülgas keine Feuchtigkeitstropfen mehr kondensieren.

Zur Reinigung der Raschigringe und zur Ablösung der verbrauchten Feststoffschicht von der Oberfläche der Raschigringe ist über einen Spülmittelanschluß 10 eine Spüllösung in die Festbettschüttung 2 einleitbar. Nach Öffnen eines Spülmittelzulaufs 11 kann der Reaktor 1 gespült werden. Im Ausführungsbeispiel wird als Spülmittel Wasser verwendet. Die gelöste Feststoffschicht läuft mit dem Spülwasser zum Boden 8 des Reaktors und wird bei geöffnetem Ablaßhahn 9 in ein in der Zeichnung nicht dargestelltes Abwasserbecken eingeführt.

In der Zeichnung sind der Lösungsmittelanschluß 6 und der Spülmittelanschluß 10 lediglich schematisch wiedergegeben. Nicht dargestellt sind Verteiler für die Imprägnierlösung und das Spülmittel oberhalb der Festbettschüttung. Im Reaktor muß die Imprägnierlösung bei ihrer Zugabe möglichst gleichmäßig innerhalb der Festbettschüttung auf den Raschigringen verteilt werden, damit sich auf möglichst allen Raschigringen eine gleichmäßige Feststoffschicht ausbilden kann. Die Gleichverteilung gelingt gut auf bereits mehrfach benutzten, etwas rauhen Raschigringschüttungen.

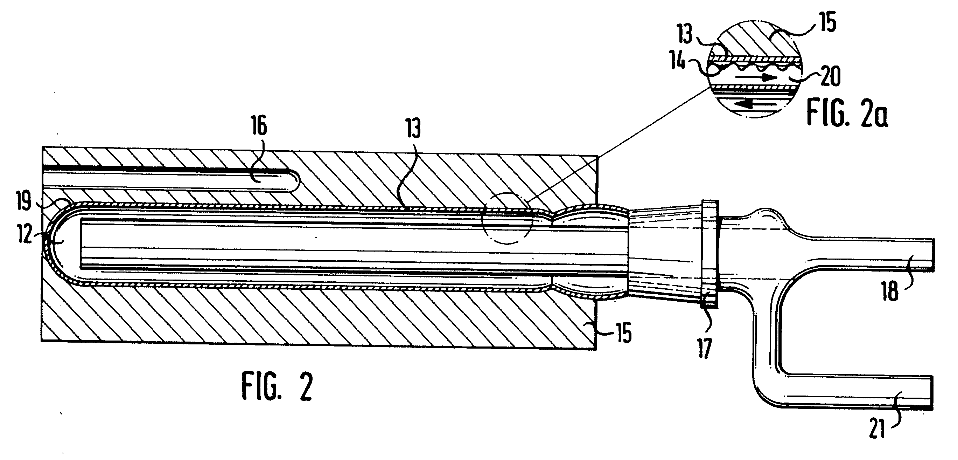

In Fig. 2 ist ein rohrförmiger Versuchsreaktor 12 dargestellt, dessen Außenwand 13 statt der Raschigringschüttung im Reaktor 1 zur Ausbildung einer Feststoffschicht 14 geeignet ist. Die Feststoffschicht 14 ist in einem in Fig. 2a wiedergegebenen Ausschnitt schematisch dargestellt. Die Außenwand 13 ist beheizbar. Im Ausführungsbeispiel dient hierzu ein die Außenwand 13 umgebender Heizmantel 15 mit einem Temperaturfühler 16. Zum Imprägnieren und Beschichten wird der Versuchsreaktor 12 an seinem Schliff 17 geöffnet. Es wird Imprägnierlösung zugegeben, die durch Drehen des Versuchsreaktors gleichmäßig auf der inneren Seite der Außenwand 13 verteilt wird. Durch Aufheizen der Außenwand über den Heizmantel 15 wird die Imprägnierlösung unter Verdampfung des Lösungsmittels aufkonzentriert bis zur Ausbildung der Feststoffschicht 14 auf der Außenwand 13.

Zur Zufuhr von Abgas dient eine Abgaszuleitung 18, die im Versuchsreaktor 12 als Innenrohr verläuft. Über die Abgaszuleitung 18 wird das Abgas bis zum Versuchsreaktorboden 19 geführt und strömt dort in einen Ringspalt 20 ein, der zwischen der Außenseite der Einlaßleitung 18 und der Innenseite der Außenwand 13 verbleibt. Nach Kontakt mit der Feststoffschicht 14 strömt das Abgas aus dem Versuchsreaktor 12 über einen Abgasausgang 21 ab.

Das Aufbringen der Feststoffschicht auf einer Rohrwand ist selbstverständlich nicht nur auf den hier beschriebenen Versuchsreaktor beschränkt. Reaktoren mit vom Abgas durchströmten Rohranordnungen, deren Wände mit Feststoffen beschichtet sind, die mit dem Abgas zur NO-Abscheidung reagieren, sind zur Abgasreinigung ohne weiteres ebenso einsetzbar wie Reaktoren mit Festbettschüttungen.

In den im Folgenden beschriebenen Ausführungsbeispielen wurde der NO-Gehalt im Abgas mit verschiedenen $NO_x$-Prüfröhrchen gemessen, deren Meßbereich von 5 bis 20000 vpm $NO_x$ reichte.

Ausführungsbeispiel 1

An einer $KMnO_4$ enthaltenden Feststoffschicht wurde NO-haltiges $CO_2$ als Abgas gereinigt. Das $CO_2$ enthielt 10000 vpm NO. Den Versuchsreaktor gemäß Fig. 2 durchströmten in 15 Minuten jeweils 10 l Abgas. Die Feststoffschicht war auf eine Gesamtoberfläche von ca. 140 cm² verteilt. Sie wurde aus einer 1,6 g $KMnO_4$ entsprechend 0,01 mol enthaltenden Imprägnierlösung gebildet.

Beim Durchströmen des Reaktors wurden aus dem Abgas an der Feststoffschicht im Durchschnitt 8000 vpm NO abgeschieden. Dabei wurde die Feststoffschicht bis zu ihrer Erschöpfung betrieben : die Abgasreinigung wurde abgebrochen, als der NO-Gehalt am Gasausgang halb so hoch wie am Gaseinlaß war.

3

Die gebundene NO-Menge von 8000 vpm NO entspricht 0,0036 mol. Da bei einer stöchiometrischen Oxidation in der Feststoffschicht gemäß oben angegebener Reaktionsgleichung 1 mol $KMnO_4$ mit 1 mol NO reagiert, wurden bis zum Abbruch der Reaktion 36% der Feststoffschicht zur Oxidation von NO verbraucht.

Daß die Feststoffschicht nach einer Betriebszeit von 15 min weitgehend verbraucht war, hat sich beim Abwaschen der verbrauchten Feststoffschicht bestätigt. Das Waschwasser enthielt viel Braunsteinpartikeln in einer schwach roten $KMnO_4$-Lösung.

Den zeitlichen Ablauf der Reaktion zeigt die nachstehende Tabelle. Daraus ist ersichtlich, daß bei den gegebenen Temperatur- und Strömungsverhältnissen NO aus dem Schadgasstrom innerhalb der ersten 5 min Betriebszeit zu 99 % abgeschieden werden konnte.

Tabelle 1

| Zeit<br>t in min | Vorgang |
|---|---|
| Vorbereitungszeit<br>ca. 15 min | Imprägnieren der Feststoffschicht mit 1,6 g $KMnO_4$ in wäßriger Lösung bzw. Aufschlämmung.<br>Aufheizung der Feststoffschicht bis auf T = 250°C und Ausbildung einer nadelig kristallinen $KMnO_4$-Feststoffschicht. |

Gaseinlaß: Abgas mit 10000 vpm NO, Rest $CO_2$; Abgasstrom 40 l/h; NO-Konzentration am Gasausgang in vpm NO:

| | |
|---|---|
| 0 | 100 |
| 5 | 100 |
| 7 | 1000 |
| 10 | 2000 |
| 15 | 5000 |

## Ausführungsbeispiel 2

Der mit Wasser gereinigte Reaktor wurde erneut mit $KMnO_4$ beschichtet. Die Beschichtung erfolgte in gleicher Weise wie beim Ausführungsbeispiel 1. Die NO-Konzentration im zu reinigenden Abgas betrug nur noch 100 vpm NO, Rest $CO_2$, der Abgasdurchsatz blieb konstant bei 40 l/h.

Die Temperatur in der Feststoffschicht wurde verändert. Nach einer Aufheizung bis auf 260°C wurde die Temperatur allmählich wieder bis auf 125°C gesenkt.

Tabelle 2 zeigt die Ergebnisse bei Temperaturänderung in der Feststoffschicht:

Tabelle 2

| Zeit t in min | Vorgang |
|---|---|
| Vorbereitungszeit ca. 5 min | Imprägnieren der Feststoffschicht mit 1,6 g $KMnO_4$ in wäßriger Lösung bzw. Aufschlämmung. |

Gaseinlaß: Abgas mit 100 vpm NO, Rest $CO_2$; Abgasstrom 40 l/h.

| Temperatur in der Feststoffschicht in °C | NO-Konzentration am Gasausgang in vpm NO |
|---|---|
| 240 | < 5 |
| 260 | < 5 |
| 225 | < 5 |
| 200 | < 5 |
| 175 | < 5 |
| 150 | 10 |
| 125 | 30 |

(Zeit t in min: 0, 5, 12, 17, 23, 30, 38)

Aus der Tabelle 2 ist ersichtlich, daß das Abgas im Temperaturbereich zwischen 260°C und 150°C einwandfrei gereinigt werden konnte. Die Konzentration am Gasausgang betrug bis zu einer Temperatur von 175°C maximal 5 vpm NO, bei 150°C 10 vpm NO. Zum erkennbaren Rückgang der NO-Abscheidung kam es erst, als 150°C unterschritten wurden.

Wie festgestellt werden konnte, weist die Oxidation an der heißen Feststoffschicht jedoch hystereseartige Erscheinungen auf : Beim Aufheizen der Feststoffschicht aus feuchtem Zustand lag die Temperaturschwelle, bei der die Gasreinigung einsetzte und die Ausgangskonzentration auf 10 vpm NO sank, bei 200°C.

Aus Beispiel 2 ist ersichtlich, daß es mit einer heißen $KMnO_4$-Feststoffschicht gelingt, auch Spurengehalte von NO zu entfernen. Die Temperatur in der Feststoffschicht muß dabei allerdings über 150°C liegen.

Ausführungsbeispiel 3

Es wurden Raschigringe in einer Festbettschüttung in einem Festbettreaktor gemäß Fig. 1 mit einer $KMnO_4$-$Na_2CO_3$-Feststoffschicht beschichtet. Die Temperatur in dieser alkalischen Feststoffschicht wurde für die Abgasreinigung auf 260°C eingestellt. Dem Reaktor wurde NO-haltiges $Co_2$ als Abgasstrom mit 0,5 m³/h zugeführt, die $NO_x$-Gehalte im Abgas wurden am Gaseingang während des Betriebs verändert.

Tabelle 3 gibt die Variation der NO bzw. $NO_x$-Gehalte im zugeführten Abgas sowie die am Gasausgang gemessenen NO bzw. $NO_x$-Gehalte wieder:

Tabelle 3

| Zeit<br>t in min | Vorgang |
|---|---|
| Vorbereitungszeit<br>ca. 20 min | Imprägnieren mit einer wäßrigen Lösung bzw. Aufschlämmung, die in 200 ml Wasser ca. 15 g $Na_2CO_3$ und 15 g $KMnO_4$ enthält. |

Temperatur in der Feststoffschicht
$T = 260°C$
Abgasstrom 0,5 $m^3$/h.

NO- bzw. $NO_x$-Konzentration in vpm NO bzw. $NO_x$ an

| | Gaseinlaß | Gasausgang |
|---|---|---|
| 0 | 100 NO | < 5 NO |
| 5 | 100 NO | < 5 NO |
| 10)* | 250 $NO_x$ | < 5 $NO_x$ |
| 15 | > 20000 $NO_x$ | 2000 $NO_x$ |
| 20 | 10000 $NO_x$ | 1000 $NO_x$ |

)* Anmerkg.:

Nach 9 min wurde mit dem $CO_2$-Abgasstrom in den Reaktor neben NO zusätzlich $NO_x$ eingeleitet. Es wurde ein Reaktionsgefäß zugeschaltet, in dessen Bodenbereich Cu in $HNO_3$ aufgelöst wurde (braune Gasbildung). An der Feststoffschicht schied sich dann braunes $NO_x$ ab. An Gaseinlaß und Gasauslaß wurde die $NO_x$-Konzentration gemessen.

**Patentansprüche**

1. Verfahren zur $NO_x$-Abscheidung aus Abgasströmen, die zur Reinigung mit einer regenerierbaren, die Stickoxide bindenden Feststoffschicht bei erhöhter Temperatur in Kontakt gebracht werden, wobei die mit den Stickoxiden chemisch reagierende Feststoffschicht Kaliumpermanganat enthält, **dadurch gekennzeichnet,** daß die Feststoffschicht aus einer wäßrigen Lösung bzw. Aufschlämmung des Permanganats nach Auftragen auf einem Trägerkörper durch Aufheizen der Schicht und Eintrocknen auf dem Trägerkörper gebildet wird, und daß die Feststoffschicht zur Reaktion mit den Stickoxiden eine Betriebstemperatur zwischen 150 und 260°C, bevorzugt 200°C aufweist.

2. Verfahren nach Anspruch 1, **dadurch gekennzeichnet,**
daß beim Trocknen der Feststoffschicht zum Abführen der Dämpfe ein Spülgas verwendet wird, und der Trocknungsvorgang beendet wird, wenn aus dem Spülgas keine Feuchtigkeitstropfen mehr kondensieren.

## Claims

1. Process for NO$_x$ removal from off-gas streams, which are contacted at elevated temperature with a regenerable solids layer which binds the nitrogen oxides, the solids layer reacting chemically with the nitrogen oxides containing potassium permanganate,
characterised in that the solids layer is formed from an aqueous solution or suspension of the permanganate, after application to a support body, by heating the layer and drying on the support body, and in that the solids layer, for reaction with the nitrogen oxides, is at an operating temperature of between 150 and 260°C, preferably 200°C.

2. Process according to Claim 1,
characterised in that, when the solids layer is dried, a flushing gas is used for removing vapours, and the drying step is terminated when drops of moisture no longer condense out of the flushing gas.

## Revendications

1. Procédé de séparation de NO$_x$ de courants d'effluents gazeux qui, pour l'épuration, sont mis en contact à température élevée avec une couche de solide régénérable et fixant les oxydes d'azote, la couche de solide réagissant chimiquement sur les oxydes d'azote contenant du permanganate de potassium,
caractérisé en ce qu'il consiste à former la couche de solide à partir d'une solution aqueuse ou d'une suspension aqueuse du permanganate après dépôt sur un support par chauffage de la couche et séchage sur le support, la couche de solide ayant, pour la réaction sur les oxydes d'azote, une température de fonctionnement comprise entre 150 et 260°C et de préférence de 200°C.

2. Procédé suivant la revendication 1,
caractérisé en ce qu'il consiste à utiliser pour le séchage de la couche de solide, en vue d'évacuer les vapeurs, un gaz de balayage, et à mettre fin au processus de séchage quand des gouttelettes d'humidité ne se condensent plus du gaz de balayage.

FIG. 1

FIG. 2a

FIG. 2

EP 0 290 973 B1